# EUROPÄISCHE PATENTANMELDUNG

(11) **EP 3 739 360 A2**
(43) Veröffentlichungstag der Anmeldung: **18.11.2020**
(21) Anmeldenummer: 20168933.8
(22) Anmeldetag: 09.04.2020
(51) Int. Cl.: G01S 7/539, B60C 23/06, G01S 15/87, G01S 15/88, B60T 8/18, G01S 7/521

(54) **SENSORANORDNUNG UND FORTBEWEGUNGSMITTEL ZUM ERFASSEN EINES ULTRASCHALLSIGNALS IM BEREICH EINES RADES EINES FORTBEWEGUNGSMITTELS**

(30) Priorität: 15.05.2019 DE 102019207050
(71) Anmelder: Robert Bosch GmbH, 70442 Stuttgart (DE)
(72) Erfinder: Koenig, Timo, 74199 Unterheinriet (DE); Dengler, Christian, 71272 Renningen (DE); Mauel, Ingo, 71717 Beilstein (DE); Weissenmayer, Simon, 74223 Flein (DE); Hauck, Benjamin, 71364 Winnenden (DE)

(57) **Zusammenfassung**

Die vorliegende Erfindung betrifft eine Sensoranordnung und ein Fortbewegungsmittel (80) zum Erfassen eines Ultraschallsignals im Bereich eines Rades (30) des Fortbewegungsmittels (80). Die Sensoranordnung umfasst: einen Ultraschallsensor (20) und eine Auswerteeinheit (10) umfassend einen Dateneingang (12) und einen Datenausgang (14), wobei der Ultraschallsensor (20) eingerichtet ist, derart im Bereich einer Radaufhängung (35) des Fortbewegungsmittels (80) quer zur Fahrtrichtung des Fortbewegungsmittels (80) angeordnet zu werden, dass eine Hauptachse (25) des Ultraschallsensors (20) im Wesentlichen in Richtung einer Berührfläche (45) des Rades (30) mit einer Fahrbahnoberfläche (40) ausgerichtet ist und Ultraschallsignale aus dem Bereich der Berührfläche (45) zwischen dem Rad (30) und der Fahrbahnoberfläche (40) zu erfassen und wobei die Auswerteeinheit (10) eingerichtet ist, in Verbindung mit dem Dateneingang (12) durch den Ultraschallsensor (20) erfasste Ultraschallsignale in Form eines Messsignals zu empfangen, das Messsignal zu verarbeiten, und in Verbindung mit dem Datenausgang (14) ein Ergebnis der Verarbeitung des Messsignals im Fortbewegungsmittel (80) zu verwenden.

## Beschreibung

### Stand der Technik

Die vorliegende Erfindung betrifft eine Sensoranordnung und ein Fortbewegungsmittel zum Erfassen eines Ultraschallsignals im Bereich eines Rades des Fortbewegungsmittels.

Aus dem Stand der Technik sind Fortbewegungsmittel bekannt, welche mit einem oder mehreren Ultraschallsensoren für eine Umfelderfassung der Fortbewegungsmittel versehen sind. Zu diesem Zweck werden mittels der Ultraschallsensoren zunächst Ultraschallwellen in einen vordefinierten Bereich eines Umfeldes der Fortbewegungsmittel ausgesendet. Anhand der durch das Umfeld zu den Ultraschallsensoren reflektierten bzw. gestreuten Ultraschallwellen wird anschließend eine Laufzeit der Ultraschallwellen bestimmt. Auf Basis der Laufzeit der Ultraschallwellen kann schließlich ein Abstand der Fortbewegungsmittel zu Objekten im Umfeld der Fortbewegungsmittel ermittelt werden. Eine auf diese Weise ermittelte Abstandsinformation zu Objekten im Umfeld der Fortbewegungsmittel wird im Stand der Technik beispielsweise von Manövrierassistenzsystemen der Fortbewegungsmittel (z. B. Spurwechselassistent, Einparkassistent, usw.) empfangen und verwendet.

Des Weiteren sind aus dem Stand der Technik teilautonom und/oder autonom fahrende Fortbewegungsmittel bekannt, welche zur Gewährleistung eines sicheren Fahrbetriebs, zusätzliche Informationen über Zustände aktuell befahrener Straßen (z. B. Nässe, Fahrbahnunebenheiten) bei der Steuerung der Fortbewegungsmittel berücksichtigen.

DE102015106408A1 beschreibt eine Sensoranordnung zum Erkennen eines Zustands einer Fahrbahn, welche eingerichtet ist, während einer Fahrt eines Kraftfahrzeugs auf der Fahrbahn ein Auftreffen von Wasser auf eine Radlaufverkleidung des Kraftfahrzeugs zu erfassen.

DE102015106401 beschreibt eine Sensoranordnung zum Erkennen eines Zustands einer Fahrbahn, welche eingerichtet ist, während einer Fahrt eines Kraftfahrzeugs auf der Fahrbahn ein Auftreffen von Wasser auf eine Radlaufverkleidung des Kraftfahrzeugs zu erfassen, wobei zwei Ultraschallsensoren eingesetzt werden, die in einem Abstand zueinander an oder in der Radlaufverkleidung angeordnet sind.

DE102015106402 offenbart eine Anordnung eines Ultraschallsensors, welcher auf einen Bereich zwischen einer Reifenlauffläche und einem Fahrbahnbelag gerichtet ist, zur Bestimmung einer Feuchtigkeit, wobei der Ultraschallsensor an einer Unterbodenverkleidung eines Fahrzeuges angeordnet ist.

DE102014215440A1 offenbart ein System zum Messen einer Achslast, bei welchem ein Ultraschallsensor an einem Unterboden eines Fahrzeugs angeordnet ist.

### Offenbarung der Erfindung

Gemäß einem ersten Aspekt der vorliegenden Erfindung wird eine Sensoranordnung zum Erfassen eines Ultraschallsignals im Bereich eines Rades eines Fortbewegungsmittels vorgeschlagen. Die Sensoranordnung umfasst einen Ultraschallsensor und eine Auswerteeinheit, wobei die Auswerteeinheit einen Dateneingang und einen Datenausgang aufweist und Bestandteil eines bestehenden Steuergerätes des Fortbewegungsmittels oder ein eigenständiges Steuergerät oder ein Bestandteil des Ultraschallsensors selbst sein kann. Der Ultraschallsensor ist eingerichtet, derart im Bereich einer Radaufhängung des Fortbewegungsmittels quer zur Fahrtrichtung des Fortbewegungsmittels angeordnet zu werden, dass eine Hauptachse des Ultraschallsensors im Wesentlichen in Richtung einer Berührfläche des Rades mit einer Fahrbahnoberfläche ausgerichtet ist. Der Ultraschallsensor ist weiter eingerichtet, Ultraschallsignale aus dem Bereich der Berührfläche zwischen dem Rad und der Fahrbahnoberfläche zu erfassen. Die Ausrichtung der Hauptachse des Ultraschallsensors quer zur Fahrtrichtung soll so verstanden werden, dass die Hauptachse im Wesentlichen in einer Ebene liegt, welche durch eine Querachse (y-Achse) und eine Hochachse (z-Achse) des Fortbewegungsmittels ausgebildet wird. Bevorzugt kann der Ultraschallsensor in einem Bereich des Fortbewegungsmittels angeordnet sein, der außerhalb eines Hauptspritzwasserbereichs des Rades bzw. außerhalb eines Radkastenbereichs des Fortbewegungsmittels liegt. Dieser Bereich kann des Weiteren ein Bereich einer gefederten oder einer ungefederten Masse des Fortbewegungsmittels sein. Weiter bevorzugt kann die Ausrichtung der Hauptachse des Ultraschallsensors innerhalb der oben beschriebenen Ebene derart erfolgen, dass die Hauptachse nach unten (d. h. in negativer Richtung der z-Achse) geneigt ist, so dass die Hauptachse des Ultraschallsensors in Richtung der Berührfläche des Rades mit der Fahrbahnoberfläche ausgerichtet ist. Auf diese Weise lassen sich durch das Rad erzeugte Abrollgeräusche weitestgehend unbeeinflusst von externen Störeinflüssen und mit einem relativ hohen Signal-Rauschabstand erfassen, da zum einen Geräusche aus dem Umfeld des Fortbewegungsmittels (zum Beispiel durch ein überholendes, weiteres Fortbewegungsmittel) durch das Rad zumindest teilweise abgeschirmt werden und da zum anderen aufspritzendes Wasser bei einer nassen Fahrbahn im Wesentlichen nicht direkt auf den Ultraschallsensor trifft. Aufgrund einer dadurch erreichten hohen Qualität des Messsignals kann insbesondere ein im Fortbewegungsmittel ausgeführtes Verfahren zum Ermitteln eines Reifenzustandes des Rades und/oder zum Ermitteln eines Straßenzustandes (trocken, feucht, nass, vereist, verschneit, raue Oberfläche, glatte Oberfläche usw.) verbessert werden, da bereits eine geringe vorhandene Feuchtigkeitsmenge auf einer Fahrbahnoberfläche auf Basis der erfindungsgemäßen Ultraschallsensoranordnung ermittelt werden kann.

Außerdem hat die erfindungsgemäße Anordnung und Ausrichtung des Ultraschallsensors im Zusammenhang mit einem lenkbaren Rad den Vorteil, dass ein Einfluss eines jeweiligen Lenkwinkels des Rades auf das Erfassen der Fahrgeräusche im Vergleich zu einer Anordnung des Ultraschallsensors im Radkastenbereich minimiert werden kann. Dies liegt darin begründet, dass die Hauptachse bzw. die Haupterfassungsrichtung des Ultraschallsensors direkt auf die Ultraschallquelle gerichtet sind, nämlich der Berührfläche zwischen der Fahrbahn und dem Rad, wodurch eine Auslenkung des Rades den Raum zwischen der Ultraschallquelle und dem Ultraschallsensor nur wenig beeinflusst.

Die Auswerteeinheit kann beispielsweise als ASIC, FPGA, Prozessor, digitaler Signalprozessor, Mikrocontroller, o.ä., ausgestaltet und informationstechnisch an eine interne und/oder externe Speichereinheit angebunden sein, in welcher durch die Auswerteeinheit empfangene und/oder berechnete Daten für eine nachfolgende Verarbeitung durch die Auswerteeinheit abgelegt werden können. Ferner ist die Auswerteeinheit eingerichtet, in Verbindung mit dem Dateneingang durch den Ultraschallsensor erfasste Ultraschallsignale in Form eines Messsignals zu empfangen, das Messsignal zu verarbeiten und in Verbindung mit dem Datenausgang ein Ergebnis der Verarbeitung des Messsignals im Fortbewegungsmittel zu verwenden. Zu diesem Zweck kann der Dateneingang der Auswerteeinheit beispielsweise über ein Bordnetz des Fortbewegungsmittels informationstechnisch mit dem Ultraschallsensor verbunden sein. Darüber hinaus kann der Datenausgang der Auswerteeinheit über das Bordnetz des Fortbewegungsmittels mit einem oder mehreren Steuergeräten des Fortbewegungsmittels verbunden sein, welche eingerichtet sein können, das Ergebnis der Verarbeitung des Messsignals zu empfangen. Alternativ oder zusätzlich kann das Ergebnis auch durch die Auswerteeinheit selbst verarbeitet werden.

Die Unteransprüche zeigen bevorzugte Weiterbildungen der Erfindung.

In einer vorteilhaften Ausgestaltung der vorliegenden Erfindung umfasst die Sensoranordnung des Weiteren einen Beschleunigungssensor, wobei der Beschleunigungssensor ein Bestandteil des Ultraschallsensors selbst oder ein eigenständiger Sensor sein kann. Der Beschleunigungssensor ist eingerichtet, im Bereich der ungefederten Masse im Umfeld des Ultraschallsensors angeordnet zu werden. Die erfindungsgemäße Auswerteeinheit ist zusätzlich eingerichtet, ein Signal des Beschleunigungssensors zu empfangen und das Signal bei der Verarbeitung des Messsignals des Ultraschallsensors zu berücksichtigen. Zu diesem Zweck kann die Auswerteeinheit beispielsweise über das Bordnetz des Fortbewegungsmittels informationstechnisch mit dem Beschleunigungssensor verbunden sein. Das Signal des Beschleunigungssensors kann insbesondere durch den Beschleunigungssensor erfasste Vibrationen im Bereich der ungefederten Masse des Fortbewegungsmittels repräsentieren, welche durch die Auswerteeinheit u. a. dazu genutzt werden können, um unerwünschte Einflüsse dieser Vibrationen auf das Messsignal des Ultraschallsensors im Messsignal zumindest teilweise zu kompensieren. Auf diese Weise lässt sich die Qualität des Messsignals und somit ggf. auch eine Zuverlässigkeit des Ergebnisses der Verarbeitung des Messsignals entsprechend verbessern. Für den Fall, dass der Beschleunigungssensor kein integraler Bestandteil des Ultraschallsensors selbst ist, kann der Ultraschallsensor wahlweise im Bereich der ungefederten Masse oder im Bereich der gefederten Masse des Fortbewegungsmittels angeordnet sein. In beiden Fällen kann das Signal des Beschleunigungssensors vorteilhaft im Zusammenhang mit einer Verarbeitung des Messsignals des Ultraschallsensors verwendet werden.

In einer weiteren vorteilhaften Ausgestaltung der vorliegenden Erfindung ist die Auswerteeinheit eingerichtet ist, im Zuge des Verarbeitens des Messsignals eine Information über einen aktuellen Höhenstand des Fortbewegungsmittels zu ermitteln. Hierfür kann der Ultraschallsensor bevorzugt derart am Fortbewegungsmittel angeordnet werden, dass er sich im Bereich der gefederten Masse des Fortbewegungsmittels befindet und dass er neben der Berührfläche des Rades mit der Fahrbahn die Fahrbahnoberfläche deutlich als Objekt erfassen kann. Durch ein Aussenden eines Ultraschallanregungssignals durch den Ultraschallsensor und ein Erfassen der durch die Fahrbahnoberfläche reflektierten bzw. gestreuten Anteile dieses Signals kann auf Basis einer Berechnung einer Laufzeit des Signals ein jeweiliger Abstand des Ultraschallsensors zur Fahrbahnoberfläche in der Auswerteeinheit ermittelt werden. Anschließend kann aus einem Wert für den ermittelten Abstand die Information über den Höhenstand des Fortbewegungsmittels abgeleitet werden. Auf diese Weise kann ein separater (z. B. mechanischer) Höhenstandssensor für das Fortbewegungsmittel entfallen, wodurch Kosten eingespart werden können. Die Information über den Höhenstand des Fortbewegungsmittels kann anschließend beispielsweise für eine automatische Höheneinstellung von Scheinwerfern des Fortbewegungsmittels verwendet werden. Darüber hinaus kann auf Basis dieser Information ein aktives Fahrwerk eingestellt und/oder ein Gewicht des Fortbewegungsmittels ermittelt werden. Für den Fall, dass eine Genauigkeit der Berechnung des Abstandes bzw. des Höhenstandes nicht ausreichen sollte, kann durch eine Anordnung eines zweiten Ultraschallsensors im Umfeld des ersten Ultraschallsensors auf Basis einer Trilateration ein genauerer Wert für den Höhenstand des Fortbewegungsmittels berechnet werden.

In einer weiteren vorteilhaften Ausgestaltung der vorliegenden Erfindung ist der Ultraschallsensor eingerichtet, Ultraschallsignale zu erfassen, welche im Wesentlichen nur durch den Fahrbahnkontakt des Rades während einer Fahrt des Fortbewegungsmittels erzeugt werden. Eine solche Art der Ultraschallsignalerfassung kann insbesondere in solchen Zeiträumen stattfinden, in denen durch den Ultraschallsensor ausgesendete Anregungssignale und/oder aus dem Umfeld des Ultraschallsensors reflektierte Anteile der Anregungssignale im Wesentlichen soweit abgeklungen sind, dass diese ein für eine Verarbeitung des Messsignals erforderliches Signal-Rauschverhältnis nicht oder nur unwesentlich negativ beeinflussen. Ein in einem solchen Zeitraum erzeugtes Messsignal des Ultraschallsensors kann besonders vorteilhaft für die oben beschriebene Straßen- und/oder Reifenzustandsbestimmung im Fortbewegungsmittel verwendet werden. Um ein schnelles Abklingen des Anregungssignals zum Zwecke einer weiteren Erhöhung der Messwiederholrate zu erreichen, kann darüber hinaus eine Amplitude und/oder eine Dauer des durch den Ultraschallsensor ausgesendeten Anregungssignals verringert werden. Bevorzugt können die Messwiederholrate des Ultraschallsensors und/oder die Amplitude des Anregungssignals und/oder die Dauer des Anregungssignals in Abhängigkeit einer Entfernung des Ultraschallsensors zur Berührfläche des Rades mit der Fahrbahnoberfläche manuell und/oder automatisch angepasst werden.

Alternativ oder zusätzlich kann der Ultraschallsensor eingerichtet sein, Ultraschallsignale zu erfassen, welche im Wesentlichen nur durch die Fahrbahnoberfläche und/oder durch das Rad reflektierte Ultraschallechos des zuvor ausgesendeten Anregungssignals des Ultraschallsensors repräsentieren. Die erfindungsgemäße Anordnung und Ausrichtung des Ultraschallsensors bietet in diesem Zusammenhang eine Mehrzahl nachfolgend beschriebener Vorteile. Zum einen wirkt das Rad des Fortbewegungsmittels auch in diesem Fall abschirmend gegenüber unerwünschten Ultraschallsignalen aus dem Umfeld des Fortbewegungsmittels. Zum anderen kann eine Messwiederholrate des Ultraschallsensors im Vergleich zu einer herkömmlichen Verwendung des Ultraschallsensors im Zusammenhang mit einer Umfelderfassung erhöht werden. Dies liegt darin begründet, dass das Anregungssignal aufgrund des geringen Abstandes zwischen dem Ultraschallsensor und dem Rad bzw. der Fahrbahnoberfläche eine sehr kurze Laufzeit bis zum Erfassen der reflektierten Anteile des Anregungssignals im Ultraschallsensor aufweisen kann. D. h., dass jeweilige Messungen des Ultraschallsensors auf Basis des Anregungssignals entsprechend häufiger durchgeführt werden können. Darüber hinaus bietet der im Wesentlichen quer zur Fahrtrichtung des Fortbewegungsmittels ausgerichtete Ultraschallsensor den Vorteil, dass durch das Anregungssignal erzeugte Bodenechos auch bei hoher Geschwindigkeit des Fortbewegungsmittels besonders gut erfasst werden können, da ein Einfluss des Dopplereffektes auf diese Signale auf diese Weise reduziert werden kann. Durch eine damit einhergehende geringe Frequenzverschiebung zwischen der Frequenz des Anregungssignals und der Frequenz des erfassten reflektierten Anregungssignals kann der Ultraschallsensor Ultraschallsignale sowohl mit der Eigenfrequenz des Ultraschallsensors senden, als auch empfangen. Darüber hinaus kann mit Hilfe der Bodenechos auch die Rauigkeit der Fahrbahnoberfläche erfasst werden. Da Wasser in flüssiger oder gefrorener Form die Poren der Fahrbahnoberfläche verschließen und somit eine Rauigkeit der Oberfläche Verändern kann, ist es möglich, auf Basis des Messsignals zwischen einer trockenen und/oder nassen und/oder verschneiten und/oder vereisten Fahrbahn unterschieden zu können. Auch unebene Fahrbahnoberflächen (z. B. Schotterstraßen) lassen sich auf diese Weise von asphaltierten oder betonierten Fahrbahnen unterscheiden.

In einer weiteren vorteilhaften Ausgestaltung der vorliegenden Erfindung ist die Auswerteeinheit weiter eingerichtet, durch einen Abgleich des Messsignals mit einem vordefinierten Referenzsignal eine Störung des Ultraschallsensors zum Beispiel aufgrund einer Verschmutzung und/oder einer Beschädigung einer Membran des Ultraschallsensors zu ermitteln. Das Referenzsignal kann beispielsweise in der Entwicklungsphase des Fortbewegungsmittels durch ein fehlerfreies Entwicklungsfahrzeug erzeugt und während der Produktionsphase des Fortbewegungsmittels in der an die Auswerteeinheit angebundenen Speichereinheit abgelegt werden. Des Weiteren können in der Speichereinheit ein oder mehrere Schwellenwerte für eine zulässige Abweichung des Messsignals vom Referenzsignal abgelegt sein. Für den Fall, dass die Auswerteeinheit im Zuge des Abgleichens des Messsignals mit dem Referenzsignal eine Überschreitung eines oder mehrerer Schwellenwerte für die zulässige Abweichung ermittelt, kann von einem Fehlerzustand des Ultraschallsensors ausgegangen werden. Eine Information über einen solchen Fehlerzustand kann durch die Auswerteeinheit in Form eines Signals über das Bordnetz an ein weiteres Steuergerät (z. B. Bordcomputersystem und/oder Kombiinstrument) übertragen werden, welches wiederum eingerichtet sein kann, im Ansprechen auf einen Empfang der Information über den Fehlerzustand eine Warnmeldung im Fortbewegungsmittel auszugeben.

Gemäß einem zweiten Aspekt der vorliegenden Erfindung wird ein Fortbewegungsmittel zum Erfassen eines Ultraschallsignals im Bereich eines Rades des Fortbewegungsmittels vorgeschlagen. Das Fortbewegungsmittel umfasst eine erfindungsgemäße Sensoranordnung, ein Fahrgestell, ein Fahrwerk, eine Karosserie und eine Mehrzahl von Rädern, wobei ein oder mehrere Ultraschallsensoren der Sensoranordnung eingerichtet sind, derart quer zur Fahrtrichtung des Fortbewegungsmittels am Fahrgestell oder am Fahrwerk oder an der Karosserie des Fortbewegungsmittels angeordnet zu werden, dass jeweilige Hauptachsen der jeweiligen Ultraschallsensoren im Wesentlichen in Richtung einer Berührfläche eines jeweiligen Rades der Mehrzahl von Rädern mit einer Fahrbahnoberfläche ausgerichtet sind.

In einer vorteilhaften Ausgestaltung der vorliegenden Erfindung umfasst das Fortbewegungsmittel weiter eine Ausgabeeinheit, welche beispielsweise ein Display eines Bordcomputersystems und/oder eines Kombiinstruments des Fortbewegungsmittels sein kann, wobei die Ausgabeeinheit eingerichtet ist, ein Ergebnis einer Verarbeitung durch eine Auswerteeinheit der Sensoranordnung im Fortbewegungsmittel auszugeben. Das Ergebnis der Verarbeitung kann bevorzugt jeweilige Rauschpegelwerte repräsentieren, welche durch den oder die Ultraschallsensoren der Sensoranordnung beim Erfassen von Ultraschallsignalen erzeugt werden. Eine Ausgabe des Ergebnisses der Verarbeitung kann beispielsweise in Form eines im Display dargestellten Fortbewegungsmittels (bevorzugt in einer Draufsicht) erfolgen, wobei insbesondere die Räder des Fortbewegungsmittels deutlich erkennbar sein sollten. Die durch die Mehrzahl von Ultraschallsensoren erzeugten Messsignale können durch die Auswerteeinheit in geeigneter Wiese vorverarbeitet werden (z.B. durch Filterung, Skalierung, Plausibilisierung, usw.) und in vorverarbeiteter Form anschließend an das Bordcomputercomputersystem und/oder das Kombiinstrument übertragen werden. Dort kann auf Basis einer jeweiligen Höhe der Rauschpegelwerte eine mit der jeweiligen Höhe korrespondierende Darstellung im Display erzeugt werden. Alternativ kann die Auswerteeinheit auch auf direktem Wege mit dem Display verbunden sein und die erfindungsgemäßen Informationen selbst im Display zur Anzeige bringen. So ist es zum Beispiel denkbar, die im Display dargestellten Räder in Abhängigkeit einer jeweiligen Höhe der empfangenen Rauschpegelwerte in ihrer Helligkeit und/oder Farbe und/oder Form und/oder Größe anzupassen. Dies erfolgt bevorzugt derart, dass jedes im Display dargestellte Rad jeweils denjenigen Rauschpegelwert repräsentiert, der durch die mit den jeweiligen Rädern korrespondierenden Ultraschallsensoren im Bereich der jeweiligen Räder erfasst wurden. Ein geringer Rauschpegelwert in den Messsignalen kann beispielsweise mit einem dunkel dargestellten Rad im Display einhergehen, während ein hoher Rauschpegelwert beispielsweise durch ein hell dargestelltes Rad repräsentiert werden kann. Alternativ oder zusätzlich kann eine Anpassung einer Farbe der Räder im Display derart erfolgen, dass ein geringer Rauschpegelwert zu einer Darstellung eines grau eingefärbten Rades führt, während ein hoher Rauschpegel zur Darstellung eines rot eingefärbten Rades führt. Alternativ zur Veränderung der Darstellung der gesamten Räder kann auch nur ein Teilbereich der Dargestellten Räder bzgl. der Helligkeit und/oder Farbe und/oder Form und/oder Größe in Übereinstimmung mit den jeweiligen Rauschpegelwerten verändert werden. Durch eine solche Visualisierung der durch die jeweiligen Ultraschallsensoren gemessenen Rauschpegel wird ein Fahrer des Fortbewegungsmittels in die Lage versetzt, einen aktuellen Straßenzustand im Detail bewerten zu können. Da eine Höhe der jeweiligen Rauschpegel i.d.R. in einem direkten Verhältnis zu einer Höhe einer Gefährdung durch ein Aufschwimmen der Räder bei nasser Fahrbahn steht, kann der Fahrer eine solche Gefährdung auf Basis der erfindungsgemäßen Darstellung unmittelbar selbst abschätzen. Eine solche detaillierte Überwachungsmöglichkeit kann insbesondere für einen Fahrer eines Motorsportfahrzeugs vorteilhaft sein.

In einer weiteren vorteilhaften Ausgestaltung der vorliegenden Erfindung ist die Auswerteeinheit eingerichtet, einen Fahrer des Fortbewegungsmittels bei einer Überschreitung eines vordefinierten Schwellenwertes durch jeweilige Rauschpegelwerte mittels eines optischen und/oder haptischen und/oder akustischen Hinweises im Fortbewegungsmittel über die Überschreitung zu informieren. Auf diese Weise ist keine permanente Überwachung der Fahrzeugdarstellung durch den Fahrer erforderlich. Stattdessen kann er mittels der Ausgabe des Hinweises frühzeitig über sich verändernde Straßen- und/oder Reifenzustände informiert werden. Jeweilige Schwellenwerte können ebenfalls in der an die Auswerteeinheit angebundenen Speichereinheit abgelegt sein. Ein optischer Hinweis kann beispielsweise durch ein teil- oder vollflächiges Einfärben des Displays beim Überschreiten eines Schwellenwertes erfolgen. Ein akustischer Hinweis kann beispielsweise durch Ausgaben eines Warntons über ein Audiosystem des Fortbewegungsmittels erfolgen, während ein haptischer Hinweis u. a. durch eine Lenkradvibration realisiert werden kann.

### Kurze Beschreibung der Zeichnungen

Nachfolgend werden Ausführungsbeispiele der Erfindung unter Bezugnahme auf die begleitende Zeichnung im Detail beschrieben. Dabei zeigen:
- Figur 1: eine schematische Übersicht einer ersten Ausführungsform einer erfindungsgemäßen Sensoranordnung in Verbindung mit einem Fortbewegungsmittel;
- Figur 2: eine schematische Übersicht einer zweiten Ausführungsform einer erfindungsgemäßen Sensoranordnung in Verbindung mit einem Fortbewegungsmittel; und
- Figur 3: ein Beispiel für eine Verwendung eines Ausgangssignals einer erfindungsgemäßen Sensoranordnung in Verbindung mit einem Display eines Fortbewegungsmittels.

### Ausführungsformen der Erfindung

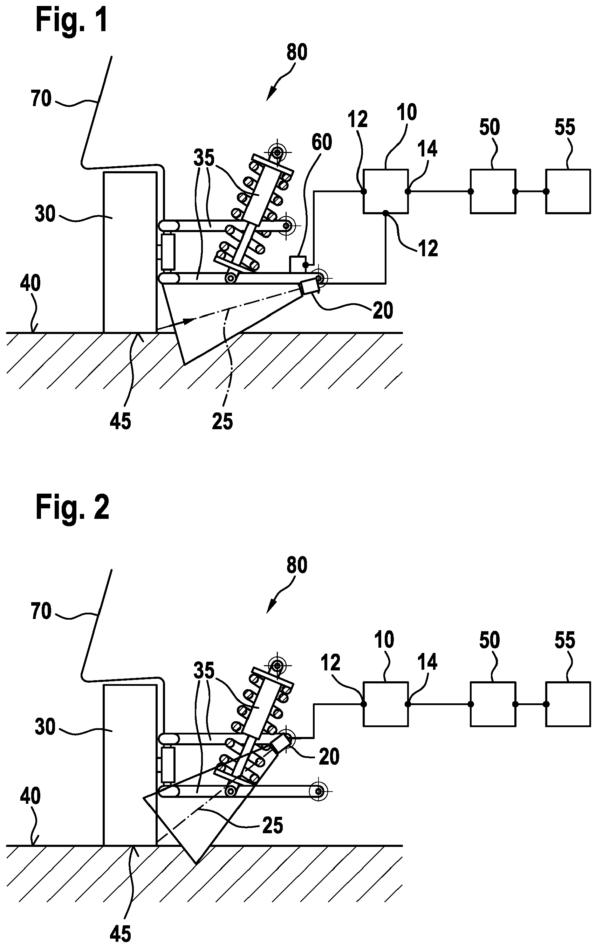

Figur 1 zeigt eine schematische Übersicht einer ersten Ausführungsform einer erfindungsgemäßen Sensoranordnung in Verbindung mit einem Fortbewegungsmittel 80. Die Sensoranordnung umfasst einen Ultraschallsensor 20, welcher im Bereich eines unteren Querlenkers einer Radaufhängung 35 eines Rades 30 des Fortbewegungsmittels 80 im Bereich der ungefederten Masse des Fortbewegungsmittels 80 angeordnet ist. Der Ultraschallsensor 20 ist derart am Fortbewegungsmittel 80 ausgerichtet, dass dessen Hauptachse 25 eine Berührfläche 45 des Rades 30 mit einer Fahrbahn 40 schneidet. Auf diese Weise ist der Ultraschallsensor 20 eingerichtet, durch den Kontakt des Rades 30 mit der Fahrbahnoberfläche 40 erzeugte Fahrgeräusche des Fortbewegungsmittels 80 zu erfassen und diese in ein analoges Messsignal zu wandeln. Das analoge Messsignal wird anschließend durch einen in den Ultraschallsensor 20 integrierten A/D-Wandler in ein digitales Messsignal gewandelt. Die Sensoranordnung umfasst darüber hinaus eine Auswerteeinheit 10, welche hier ein Mikrocontroller ist und welche über einen Dateneingang 12 und einen Datenausgang 14 verfügt. Mittels des Dateneingangs 12 ist die Auswerteeinheit 10 über ein CAN-Bussystem des Fortbewegungsmittels 80 informationstechnisch mit dem Ultraschallsensor 20 verbunden. Auf diese Weise ist die Auswerteeinheit 10 eingerichtet, dass durch den Ultraschallsensor 20 erzeugte digitale Messsignal über das CAN-Bussystem vom Ultraschallsensor 20 zu empfangen. Ebenfalls über das CAN-Bussystem ist die Auswerteeinheit 10 informationstechnisch mit einem Beschleunigungssensor 60 verbunden, welcher in der Nähe des Ultraschallsensors 20 ebenfalls am unteren Querlenker der Radaufhängung 35 angeordnet ist. Der Beschleunigungssensor 60 ist insbesondere eingerichtet, durch einen Fahrbetrieb des Fortbewegungsmittels 80 verursachte Vibrationen am unteren Querlenker aufzunehmen und ein diese Vibrationen repräsentierendes digitales Signal an die Auswerteeinheit 10 zu übertragen. Die Auswerteeinheit 10 ist auf Basis des Signals des Beschleunigungssensors 60 in der Lage, Einflüsse der oben beschriebenen Vibrationen auf das Messsignal des Ultraschallsensors 20 weitestgehend zu kompensieren. Die Auswerteeinheit 10 ist darüber hinaus in Verbindung mit dem Datenausgang 14 in der Lage, das auf diese Weise verarbeitete Messsignal des Ultraschallsensors 20 an ein informationstechnisch an die Auswerteeinheit 10 angebundenes Fahrerassistenzsystem 50 zu übertragen. Das Fahrerassistenzsystem 50 ist wiederum informationstechnisch mit einem Zentraldisplay 55 des Fortbewegungsmittels 80 verbunden, welches in einer Fahrgastzelle des Fortbewegungsmittels 80 angeordnet ist. Das Fahrerassistenzsystem 50 ist eingerichtet, auf Basis des empfangenen Messsignals, welches jeweils aktuelle Ultraschallrauschpegelwerte repräsentiert, im Zentraldisplay 55 eine visuelle Repräsentation der Ultraschallrauschpegelwerte zu erzeugen, wodurch einem Fahrer des Fortbewegungsmittels 80 eine Information über eine Höhe eines aktuellen Ultraschallrauschpegelwertes zur Verfügung gestellt werden kann.

Figur 2 zeigt eine schematische Übersicht einer zweiten Ausführungsform einer erfindungsgemäßen Sensoranordnung in Verbindung mit einem Fortbewegungsmittel 80. Aufgrund der Ähnlichkeiten zwischen der in Figur 1 beschriebenen ersten Ausführungsform und der hier beschriebenen zweiten Ausführungsform der Sensoranordnung sollen zur Vermeidung von Wiederholungen hier nur Unterschiede zwischen den beiden Ausführungsformen beschrieben werden. In der zweiten Ausführungsform ist der Ultraschallsensor 20 im Bereich eines oberen Querlenkers der Radaufhängung 35 des Fortbewegungsmittels 80 angeordnet. Eine Ausrichtung des Ultraschallsensors 20 erfolgt ähnlich zur ersten Ausführungsform, aufgrund einer hier vorhandenen höheren Anordnungsposition weist der Ultraschallsensor 20 hier aber einen steileren Winkel bezüglich der Fahrbahnoberfläche 40 auf. Auf diese Weise kann in dieser Ausführungsform zusätzlich eine Beschaffenheit der Fahrbahnoberfläche 40 durch Aussenden und Empfangen eines Anregungssignals des Ultraschallsensors 20 erfasst werden. Der in Figur 1 beschriebene Beschleunigungssensor ist hier nicht vorgesehen. Die Auswerteeinheit 10 ist in dieser Ausführungsform zusätzlich in der Lage, auf Basis des Messsignals des Ultraschallsensors 20 einen Straßenzustand und einen Reifenzustand des Rades 30 zu ermitteln. Ein Ergebnis des Ermittelns wird in Form eines Datenpakets an das Fahrerassistenzsystem 50 übertragen, welches hier zusätzlich eingerichtet ist, die im Datenpaket enthaltenen Informationen über den Straßenzustand und Reifenzustand im Display 55 auszugeben.

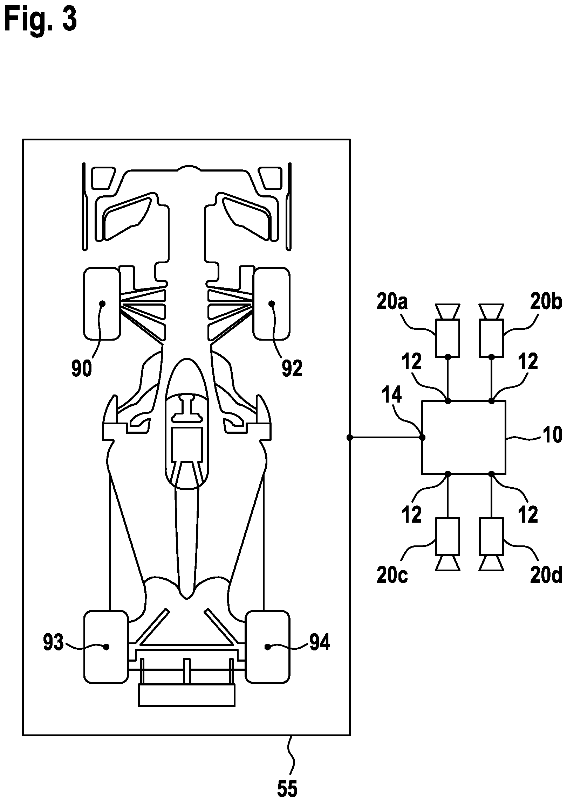

Figur 3 zeigt ein Beispiel für eine Verwendung eines Ausgangssignals einer erfindungsgemäßen Sensoranordnung in Verbindung mit einem Display 55 eines Fortbewegungsmittels. Das Display 55 ist informationstechnisch mit einer Auswerteeinheit 10 verbunden, welche eingerichtet ist, über eine Mehrzahl von Dateneingängen 12 eine Mehrzahl von Messsignalen einer Mehrzahl von Ultraschallsensoren 20a, 20b, 20c und 20d zu empfangen. Die Ultraschallsensoren 20a, 20b, 20c und 20d sind im Bereich jeweiliger (nicht gezeigter) Radaufhängungen des Fortbewegungsmittels angeordnet. Die Messsignale repräsentieren somit jeweilige im Bereich der Radaufhängungen erfasste Ultraschallsignale. Diese werden in Form von Ultraschallrauschpegelwerten in der Auswerteeinheit 10 ausgewertet und in eine visuelle Repräsentation der Ultraschallrauschpegel umgewandelt, welche im Display 55 zur Anzeige gebracht wird. Zu diesem Zweck stellt die Auswerteeinheit 10 im Display 55 ein Fortbewegungsmittel dar, dessen Räder mit kreisförmig ausgebildeten Rauschpegelindikatoren 90, 92, 93, 94 versehen sind. Die Rauschpegelindikatoren 90, 92, 93, 94 werden in Übereinstimmung mit einer jeweiligen Höhe der jeweils korrespondierenden Ultraschallrauschpegelwerte in ihrer Größe angepasst. Hohe Rauschpegelwerte werden hier in Form großer Kreise und kleine Rauschpegelwerte in Form kleiner Kreise dargestellt.

## Patentansprüche

1. Sensoranordnung zum Erfassen eines Ultraschallsignals im Bereich eines Rades (30) eines Fortbewegungsmittels (80) umfassend:
• einen Ultraschallsensor (20), und
• eine Auswerteeinheit (10) umfassend einen Dateneingang (12) und einen Datenausgang (14),
wobei
• der Ultraschallsensor (20) eingerichtet ist,
∘ derart im Bereich einer Radaufhängung (35) des Fortbewegungsmittels (80) quer zur Fahrtrichtung des Fortbewegungsmittels (80) angeordnet zu werden, dass eine Hauptachse (25) des Ultraschallsensors (20) im Wesentlichen in Richtung einer Berührfläche (45) des Rades (30) mit einer Fahrbahnoberfläche (40) ausgerichtet ist, und
∘ Ultraschallsignale aus dem Bereich der Berührfläche (45) zwischen dem Rad (30) und der Fahrbahnoberfläche (40) zu erfassen,
• die Auswerteeinheit (10) eingerichtet ist,
∘ in Verbindung mit dem Dateneingang (12) durch den Ultraschallsensor (20) erfasste Ultraschallsignale in Form eines Messsignals zu empfangen,
∘ das Messsignal zu verarbeiten, und
∘ in Verbindung mit dem Datenausgang (14) ein Ergebnis der Verarbeitung des Messsignals im Fortbewegungsmittel (80) zu verwenden.

2. Sensoranordnung nach Anspruch 1, wobei der Ultraschallsensor (30) eingerichtet ist,
• außerhalb eines Hauptspritzwasserbereichs des Rades (30) bzw. außerhalb eines Radkastenbereichs des Fortbewegungsmittels (80), und/oder
• in einem Bereich einer gefederten oder einer ungefederten Masse des Fortbewegungsmittels (80)
angeordnet zu werden.

3. Sensoranordnung nach Anspruch 2 weiter umfassend einen Beschleunigungssensor (60), wobei
• der Beschleunigungssensor (60) eingerichtet ist, im Bereich der ungefederten Masse im Umfeld des Ultraschallsensors (20) angeordnet zu werden, und
• die Auswerteeinheit (10) zusätzlich eingerichtet ist, ein Signal des Beschleunigungssensors (60) zu empfangen und das Signal bei der Verarbeitung des Messsignals des Ultraschallsensors (20) zu berücksichtigen.

4. Sensoranordnung nach einem der vorstehenden Ansprüche, wobei die Auswerteeinheit (10) eingerichtet ist, im Zuge des Verarbeitens des Messsignals einen Straßenzustand und/oder einen Reifenzustand des Rades (30) und/oder eine Information über einen aktuellen Höhenstand des Fortbewegungsmittels (80) zu ermitteln.

5. Sensoranordnung nach einem der vorstehenden Ansprüche, wobei der Ultraschallsensor (20) eingerichtet ist, Ultraschallsignale zu erfassen, welche
• im Wesentlichen nur durch den Fahrbahnkontakt des Rades (30) während einer Fahrt des Fortbewegungsmittels (80) erzeugt werden, und/oder
• im Wesentlichen nur durch die Fahrbahnoberfläche (40) und/oder durch das Rad (30) reflektierte Ultraschallechos eines zuvor ausgesendeten Anregungssignals des Ultraschallsensors (30) repräsentieren.

6. Sensoranordnung nach einem der vorstehenden Ansprüche, wobei die Sensoranordnung eingerichtet ist,
• eine Messwiederholrate des Ultraschallsensors (20), und/oder
• eine Amplitude und/oder eine Dauer eines durch den Ultraschallsensor (20) ausgesendeten Anregungssignals
in Abhängigkeit einer Entfernung des Ultraschallsensors (20) zur Berührfläche (45) des Rades (30) mit der Fahrbahnoberfläche (40) anzupassen.

7. Sensoranordnung nach einem der vorstehenden Ansprüche, wobei die Auswerteeinheit (10) weiter eingerichtet ist, durch einen Abgleich des Messsignals mit einem vordefinierten Referenzsignal eine Störung des Ultraschallsensors (20) zu ermitteln.

8. Fortbewegungsmittel (80) umfassend:
• eine Sensoranordnung nach einem der vorstehenden Ansprüche,
• ein Fahrgestell,
• ein Fahrwerk,
• eine Karosserie, und
• eine Mehrzahl von Rädern (30),
wobei
• ein oder mehrere Ultraschallsensoren (30) der Sensoranordnung eingerichtet sind, derart quer zur Fahrtrichtung des Fortbewegungsmittels (80) am Fahrgestell oder am Fahrwerk oder an der Karosserie (70) des Fortbewegungsmittels (80) angeordnet zu werden, dass jeweilige Hauptachsen (25) der jeweiligen Ultraschallsensoren (20) im Wesentlichen in Richtung einer Berührfläche (45) eines jeweiligen Rades (30) der Mehrzahl von Rädern (30) mit einer Fahrbahnoberfläche (40) ausgerichtet sind.

9. Fortbewegungsmittel (80) nach Anspruch 8 weiter umfassend eine Ausgabeeinheit (55), wobei die Ausgabeeinheit (55) eingerichtet ist, ein Ergebnis einer Verarbeitung durch eine Auswerteeinheit (10) der Sensoranordnung im Fortbewegungsmittel (80) auszugeben, wobei das Ergebnis der Verarbeitung jeweilige Rauschpegelwerte repräsentiert, welche durch den oder die Ultraschallsensoren (20) der Sensoranordnung beim Erfassen eines Ultraschallsignals erzeugt werden.

10. Fortbewegungsmittel (80) nach Anspruch 9, wobei die Auswerteeinheit (10) eingerichtet ist, einen Fahrer des Fortbewegungsmittels (80) bei einer Überschreitung eines vordefinierten Schwellenwertes durch jeweilige Rauschpegelwerte mittels eines optischen und/oder haptischen und/oder akustischen Hinweises im Fortbewegungsmittel (80) über die Überschreitung zu informieren.
